# FASCICULE DE BREVET EUROPEEN

(11) **EP 1 124 917 B1**
(45) Date de publication et mention de la délivrance du brevet: **07.01.2004**
(21) Numéro de dépôt: 99970413.3
(22) Date de dépôt: 01.10.1999
(51) Int. Cl.: C10L 1/32

(54) **COMPOSITION COMBUSTIBLE SOUS FORME D'UNE EMULSION DERIVANT DE DECHETS HETEROGENES GRAISSEUX ET PROCEDE POUR SA FABRICATION**
EMULSION VON HETEROGENE FETTABFALLSTOFFE ENTHALTENDE BRENNSTOFFZUSAMMENSETZUNG UND VERFAJREN ZU DEREN HERSTELLUNG
FUEL COMPOSITION IN THE FORM OF AN EMULSION DERIVED FROM HETEROGENEOUS GREASY WASTE AND METHOD FOR MAKING SAME

(30) Priorité: 12.10.1998 FR 9812751
(43) Date de publication de la demande: 22.08.2001
(73) Titulaire: Institut Français du Pétrole, 92852 Rueil-Malmaison Cedex (FR); Lacaze S.A., 46120 Leyme (FR)
(72) Inventeur: LACAZE, Pierre, F-46120 Leyme (FR); HENDOU, Mouloud, F-46120 Molières (FR); COLLIN, Jean-Claude, F-78610 Marsinval-Vernouillet (FR); FLAMENT, Patrick, F-78610 Auffargis (FR)
(86) Numéro de dépôt international: PCT/FR1999/002366
(87) Numéro de publication internationale: WO 2000/022069

(56) Documents cités:
- US-A- 4 842 616
- US-A- 5 380 343

## Description

La présente invention concerne une composition combustible sous forme d'émulsion, son procédé de fabrication à partir de déchets hétérogènes graisseux et le procédé de combustion utilisant cette composition combustible.

Les déchets organiques tels que ceux issus de l'industrie agro-alimentaire (farines de viandes, viscères, etc.) sont caractérisés par un pouvoir calorifique moyen élevé, mais posent d'énormes problèmes de combustion, notamment par suite de leur grande hétérogénéité.

Ainsi, en ce qui concerne l'alimentation des appareils de combustion par ces déchets, l'hétérogénéité des déchets rend leur manipulation très délicate et la régulation de la combustion aléatoire. Les foyers de combustion alimentés par ce type de déchets se trouvent soumis à des variations de pouvoir calorifique importantes et rapides : un tel mode de fonctionnement est techniquement inacceptable pour une installation classique de combustion.

De plus, du fait de l'hétérogénéité des déchets, le foyer de combustion peut se trouver en présence soit d'une fraction de déchets dont la teneur en matières volatiles est très élevée, soit d'une fraction de déchets pauvre en matières volatiles. Quel que soit le cas considéré, la combustion pose des problèmes : dans le premier cas, la combustion est très riche et les niveaux de température atteints dans le foyer de combustion engendrent des problèmes de résistance des matériaux ; dans le second cas, la combustion est pauvre et engendre des résidus et des imbrûlés.

La présente invention vise à remédier à l'ensemble des problèmes évoqués ci-dessus.

Elle a notamment pour objet de fournir, à partir de déchets organiques hétérogènes graisseux, une composition combustible homogène et stable sous forme d'une émulsion. Elle a également pour objet un procédé simple pour parvenir à une telle composition combustible. Elle a aussi pour objet un procédé de combustion ne présentant pas les inconvénients observés lors de la combustion des déchets graisseux non traités.

La composition combustible de l'invention consiste, d'une manière générale, en
- une émulsion stable eau-dans-huile et/ou eau-dans-composés organiques homogènes, formée à partir de déchets hétérogènes graisseux et comprenant au moins un agent émulsifiant et/ou un savon alcalin ou alcalino-terreux formé à partir d'une base choisie parmi les hydroxydes alcalins et alcalino-terreux, et
- des particules solides en suspension
ledit agent émulsifiant et/ou ladite base étant plus soluble dans la fraction organique contenue dans les déchets que dans l'eau.

Dans la composition combustible de l'invention, l'eau est sous forme de gouttelettes dispersées dans la phase continue, qui est une phase organique, ou phase graisseuse.

Il est à noter que, en terme de combustion, une émulsion d'eau dans la matière organique est plus intéressante qu'une émulsion de la matière organique dans l'eau, car dans le cas où la phase continue serait l'eau, il faudrait un apport d'énergie suffisant dans le dispositif de combustion pour évaporer l'eau englobant la matière organique avant d'amorcer la combustion, alors que dans le cas où la phase continue est la matière organique, il suffit d'amener un apport énergétique pour atteindre la température d'inflammation de la phase graisseuse pour amorcer la combustion : dans la solution préconisée dans l'invention, c'est la chaleur dégagée par combustion qui est utilisée pour l'évaporation de l'eau contenue dans la composition.

Selon la nature des déchets graisseux traités pour préparer la composition combustible selon l'invention, la répartition pondérale entre les différents constituants peut être la suivante :
10 à 60 % poids d'eau,
10 à 60 % poids de graisses, et
1 à 80 % poids de matières solides.

Une répartition pondérale préférée est :
10 à 55 % poids d'eau,
15 à 45 % poids de graisses, et
3 à 75 % poids de matières solides.

Les matières solides généralement contenues dans les compositions combustibles de l'invention sont en général sous forme de morceaux de tailles relativement homogènes ayant leur plus grande dimension inférieure ou égale à 10 cm, de préférence inférieure ou égale à 2 cm et, de manière encore plus préférée, inférieure ou égale à 1 cm.

Par ailleurs, les compositions combustibles de l'invention ont en général un pouvoir calorifique inférieur (PCI) d'au moins 6 000 kJ/kg, de préférence, d'au moins 10 000 kJ par kilogramme.

D'une manière générale, la fabrication des compositions combustibles selon l'invention comprend deux opérations principales :
a) une diminution de l'hétérogénéité granulométrique du déchet, et
b) la formation de l'émulsion par agitation, et éventuellement ajout d'un émulsifiant.

Le procédé selon l'invention fait l'objet de la revendication 7.

Les deux opérations peuvent être associées en une seule étape ou dissociées en plusieurs étapes effectuées successivement.

Plus particulièrement, les déchets graisseux de départ peuvent consister en toutes sortes de déchets de l'industrie agro-alimentaire, en farines animales, en viscères de palmipèdes, etc.

A titre indicatif, on peut préciser que la proportion de graisses dans les farines animales est en général de 10 à 35 % en poids. Dans les viscères, cette proportion peut être par exemple de 20 à 40 % en poids. Dans ceux-ci, la proportion d'eau peut être par exemple de 35 à 55 % en poids.

Pour réduire l'hétérogénéité des déchets graisseux, on les soumet à une opération d'homogénéisation (a), dite « opération dynamique d'homogénéisation », qui peut consister par exemple en un déchiquetage, un broyage, un découpage ou toute autre opération permettant de réduire la différence de taille entre les divers composants solides du déchet. Cette opération peut être effectuée par exemple dans un broyeur, un hachoir ou tout autre dispositif permettant le cisaillement des morceaux de déchets graisseux. L'opération peut être effectuée en batch (par lots) ou en continu.

Comme déjà indiqué plus haut, la granulométrie que l'on cherche à obtenir peut correspondre à des particules de formes variées dont la plus grande dimension est inférieure ou égale à 10 cm, de préférence inférieure ou égale à 2 cm, et de manière encore plus préférée, inférieure ou égale à 1 cm.

La température à laquelle on effectue l'homogénéisation est en général inférieure à 70 °C et de préférence inférieure à 55 °C, pour les raisons qui seront indiquées plus loin.

La formulation de l'émulsion ou homogénéisation de structure (opération (b) du procédé de fabrication de l'invention) est réalisée par agitation du déchet graisseux, après ou simultanément à l'opération (a) décrite ci-dessus.

L'eau entrant dans la composition de l'émulsion pour en constituer la phase dispersée peut provenir du déchet organique traité. Il peut également s'agir d'eau ajoutée pendant l'étape de formation de l'émulsion. En général, on préférera ne pas ajouter d'eau.

La formation d'émulsion est obtenue par agitation et éventuellement ajout d'un émulsifiant, qui est préférentiellement soluble dans la phase organique (ou graisseuse). On choisira alors des composés dont l'équilibre hydrophile/lipophile (H.L.B.) est faible. Cet équilibre, qui représente le poids relatif entre la chaîne grasse de la molécule et le groupement solubilisant, sera compris entre 2 et 8 et de préférence entre 3 et 6.

Parmi les familles de composés émulsifiants favorisant la formation d'une émulsion d'eau dans la graisse, on pourra choisir des composés éthoxylés ou propoxylés d'alcools, d'acides et d'esters gras, d'amines ou d'amides à poids moléculaires élevés. On préférera des alcools gras supérieurs tels que les stérols, les mono - et di-esters de polyglycol à chaîne polyglycolique courte.

Les teneurs de ces composés émulsifiants par rapport à la masse globale du mélange liquide, graisse plus eau, seront comprises entre 0,5 et 5 % poids et de préférence entre 1 et 3 % poids.

Des agents émulsifiants de type huiles sulfonées ou sulfatées pourraient également être mis en oeuvre, mais ils libéreraient lors de la combustion des quantités d'oxydes de soufre non négligeables.

Des couples d'émulsifiants, de comportements différents lorsqu'ils sont pris séparément, peuvent conduire, lorsqu'ils sont associés dans des proportions adaptées, à des émulsions eau dans huile stables. On peut citer par exemple des esters d'alcools lourds mélangés à des sels d'ammonium quaternaires.

Dans une version préférée de l'invention, l'émulsifiant est fabriqué in-situ par adjonction aux déchets de traces d'une base consistant en général en un hydroxyde de métal alcalin ou alcalino-terreux tel que par exemple, la soude, la potasse, la chaux ou l'hydroxyde de magnésium, après ou pendant leur homogénéisation granulométrique.

En effet, les déchets graisseux d'un côté contiennent des traces d'acides gras libres et d'un autre côté subissent une hydrolyse partielle, qui libère des acides gras et des alcools (en général le glycérol). En conséquence, l'ajout d'une base alcaline ou alcalino-terreuse provoque la neutralisation des acides et la formation de savons alcalins ou alcalino-terreux, qui jouent le rôle d'émulsifiants lors de la préparation de l'émulsion.

D'une manière schématique et si on représente la fraction organique contenue dans les déchets sous forme de triglycérides, les réactions mises en jeu sont les suivantes :

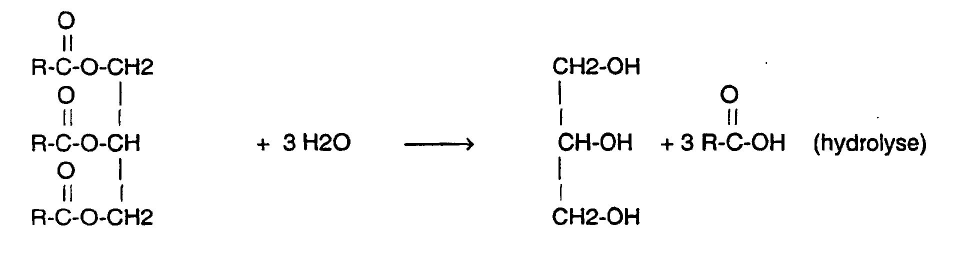

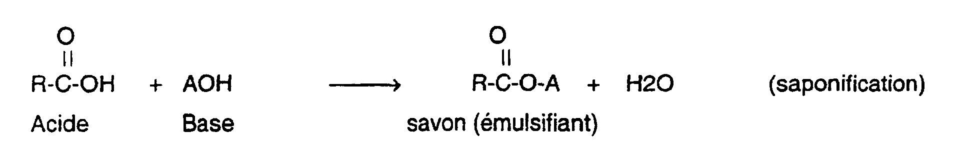

La réaction d'hydrolyse étant favorisée par l'élévation de la température, il est recommandé d'effectuer l'opération dynamique d'homogénéisation (a), destinée à diminuer l'hétérogénéité granulométrique, à des températures basses et contrôlées, par exemple inférieures à 55 °C, car une hydrolyse avancée engendre l'augmentation de l'acidité des déchets, ce qui nécessite l'emploi de quantités plus élevées de base pour la neutralisation des acides. Ce phénomène est pénalisant pour deux raisons, la première est économique et la seconde est liée à la combustion. En effet, l'ajout de quantités importantes de bases réduit le pouvoir calorifique du combustible final et engendre des résidus de combustion sous forme de sels alcalins.

En conséquence, selon une version préférée de cette invention, l'opération dynamique (a) d'homogénéisation est effectuée à des températures inférieures à 70 °C, et de préférence inférieure à 55 °C pour les raisons citées ci-dessus, et pour éviter tout phénomène de claquage provoquant la rupture de l'émulsion.

Dans l'opération d'émulsification (b), le choix de la base de neutralisation ou de l'agent émulsifiant est fondamental. Dans la présente invention, on cherche à produire un combustible sous forme d'une émulsion eau dans la matière organique et non pas, matière organique dans l'eau, et ceci de préférence par simple utilisation de l'eau contenue initialement dans les déchets.

Dans le cas de l'utilisation d'une base de neutralisation, on utilise de préférence une solution aqueuse concentrée à une teneur de 10 à 40 % poids, et de préférence de 20 à 30 % poids. Une base trop diluée peut en effet provoquer la formation d'une émulsion matières organiques dans l'eau, ainsi que la diminution du pouvoir calorifique du combustible.

Afin d'aboutir à un combustible sous forme d'une émulsion eau dans la matière organique, il est indispensable de s'assurer que le savon alcalin ou alcalino-terreux formé par l'adjonction de la base aux déchets, ou que l'agent émulsifiant, est plus soluble dans la fraction organique composant les déchets que dans l'eau.

La fabrication du combustible nécessite dans l'opération (b) un contact intime entre les déchets et l'émulsifiant ou la base de neutralisation. On préconise une agitation du mélange déchet - émulsifiant et/ou base de neutralisation pendant 3 à 4 minutes, avec un dispositif pouvant fournir une énergie de mélange comprise entre 50 et 500 kJ par kilogramme de déchets, et de préférence entre 100 et 250 kJ par kilogramme de déchets.

Les étapes (a) et (b) de fabrication du combustible telles que mentionnées ci-dessus sont données à titre indicatif. Ceci n'exclut pas la fabrication du combustible en une seule étape conjuguant l'homogénéisation granulométrique et la production de l'émulsion.

Selon l'invention, il est possible d'ajouter à la phase organique de l'émulsion un agent bloquant la fermentation, ainsi que, pour accroître si nécessaire le pouvoir calorifique de la composition combustible, un ou plusieurs combustibles hydrocarbonés tel qu'un fuel-oil.

Les compositions combustibles de l'invention obtenues à partir de déchets hétérogènes graisseux se présentent sous la forme d'émulsions homogènes et stables, faciles à manipuler et à utiliser dans divers types d'installations de combustion classique comme par exemple les fours horizontaux, les fours verticaux, les fours à étages ou à soles étagées, les fours rotatifs, les foyers à lit fluidisé ou à lit circulant ou les foyers à coupelles rotatives ou tout autre type de foyer pouvant admettre des produits liquides et/ou pâteux.

### EXEMPLES

On montre ci-après les avantages des compositions de l'invention dans le cas particulier de la valorisation énergétique des viscères de palmipèdes par combustion.

Afin de qualifier et de quantifier l'apport de l'invention, des tests de combustion dans un foyer à sole ont été réalisés pour les deux cas suivants : des viscères bruts hétérogènes et une émulsion préparée suivant la présente invention à partir des viscères bruts.

### Exemple 1 (comparatif)

Dans le cas du produit brut hétérogène, divers problèmes ont été rencontrés, parmi lesquels on peut citer :
- Les difficultés d'alimentation du foyer par le produit : même si plusieurs techniques ont été envisagées (alimentation gravitaire, alimentation par vis sans fin, alimentation sous pression), il a été quasiment impossible de réaliser l'alimentation avec un débit régulier.
- Le stockage de la charge dans un bac tampon s'est révélé très délicat : la charge présente une structure stratifiée au bout de quelques heures avec relargage de l'eau graisseuse, ce qui engendre des difficultés de combustion, notamment l'extinction de la flamme lors de l'alimentation du foyer par la fraction eau graisseuse.
- La combustion dans le foyer a été irrégulière suite à la différence du PCI du produit, allant de 40 000 kJ/kg pour la fraction grasse à 5 000 kJ/kg pour la fraction solide du déchet. Cette disparité du PCI a rendu l'automatisation de la combustion très délicate, notamment en terme d'alimentation en air de combustion.
- Il n'a pas été possible de réaliser une combustion complète du déchet : le résidu de combustion était sous forme de coke et représentait 1 à 2 % du poids de la charge traitée. Le coke, caractérisé par une faible densité, s'est accumulé dans le foyer, ce qui a réduit la capacité volumique de l'appareil.
- Le débit maximal qui a pu être traité par le foyer était de 30 kg/h.

### Exemple 2 (selon l'invention)

Dans le cas d'une émulsion selon la présente invention, les difficultés citées précédemment ont été surmontées :
- Le produit s'est montré facilement transportable par simple pompage et l'alimentation du brûleur a pu se faire de manière continue.
- Le produit émulsionné ne se stratifiant plus, il a été possible de faire varier sa viscosité par chauffage pour faciliter son pompage.
- Le PCI du produit arrivant au brûleur a été constant dans le temps et égal au PCI moyen.
- Le débit maximal du brûleur n'est plus limité à 30 kg/h. Des essais à un débit de 50 kg/h ont été effectués avec succès, limités seulement par la capacité de pompage de la charge.
- Le mélange entre le combustible vaporisé et l'air a pu être effectué de manière simple et efficace, ce qui a permis d'éviter la formation de coke.
- La régulation du brûleur a été facilitée par la possibilité d'alimenter le brûleur en continu.

Les avantages mentionnés ci-dessus sont résumés dans le tableau suivant :

| **Viscères bruts** | **Viscères broyés et émulsionnés** |
|---|---|
| Alimentation en batch | Alimentation continue |
| Stratification entraînant un PCI variable | PCI moyen |
| Large spectre des vitesses de combustion | Spectre plus étroit |
| Régulation difficile | Régulation simplifiée |
| Présence de zones riches, sources de cokage | Absence de zones riches - Mélange air - combustible homogène ⇒ moins de cokage |
| Chauffage du combustible impossible et, de toute façon, déconseillé (stratification) | Chauffage possible dans le cas d'une émulsion |

## Revendications

1. Composition combustible **caractérisée en ce qu'**elle comprend :
- une émulsion stable eau-dans-huile et/ou eau-dans-composés organiques homogènes, formée à partir de déchets hétérogènes graisseux et comprenant au moins un agent émulsifiant et/ou un savon alcalin ou alcalino-terreux formé à partir d'une base choisie parmi les hydroxydes alcalins et alcalino-terreux, et
- des particules solides en suspension
ledit agent émulsifiant et/ou ladite base étant plus soluble dans la fraction organique contenue dans les déchets que dans l'eau.

2. Composition combustible selon la revendication 1, **caractérisée en ce qu'**elle comprend de 10 à 60 % poids d'eau, de 10 à 60 % poids de graisses et de 1 à 80 % en poids de particules solides.

3. Composition combustible selon la revendication 1, **caractérisée en ce qu'**elle comprend de 10 à 55 % poids d'eau, de 15 à 45 % poids de graisses et de 3 à 75 % poids de particules solides.

4. Composition combustible selon l'une des revendications 1 à 3, **caractérisée en ce que** les particules solides ont une taille maximale de 2 cm dans leur plus grande dimension.

5. Composition combustible selon l'une des revendications 1 à 3, **caractérisée en ce que** les particules solides ont une taille maximale de 1 cm dans leur plus grande dimension.

6. Composition combustible selon l'une des revendications 1 à 5, **caractérisée en ce qu'**elle présente un pouvoir calorifique inférieur (PCI) d'au moins 6 000 kJ/kg, de préférence d'au moins 10 000 kJ/kg.

7. Composition combustible selon l'une des revendications 1 à 6, **caractérisée en ce qu'**elle comprend en outre dans la phase graisseuse un agent bloquant la fermentation et/ou au moins un hydrocarbure liquide.

8. Procédé de fabrication d'une composition combustible selon l'une des revendications 1 à 7, **caractérisé en ce qu'**il comprend la mise en oeuvre d'une homogénéisation granulométrique (a) d'un déchet graisseux et (b) la formation d'une émulsion eau-dans-huile et/ou eau-dans-composés organiques, effectuée, pendant ou après l'homogénéisation granulométrique (a), sous agitation et en présence d'un agent émulsifiant ou d'une base choisie parmi les hydroxydes alcalins et alcalino-terreux, ledit agent émulsifiant et/ou ladite base étant plus soluble dans la fraction organique contenue dans les déchets que dans l'eau.

9. Procédé selon la revendication 8, **caractérisé en ce que** l'homogénéisation granulométrique (a) est effectuée à une température inférieure à 70 °C, et de préférence à une température inférieure à 55 °C.

10. Procédé selon l'une des revendications 8 et 9, **caractérisé en ce que** l'agent émulsifiant est un composé éthoxylé ou propoxylé d'alcools, d'acides ou d'esters gras, d'amines ou d'amides à poids moléculaires élevés, ou du mélange de deux ou de plusieurs de ces composés.

11. Procédé selon l'une des revendications 8 à 10, **caractérisé en ce que** l'agent émulsifiant est choisi parmi des savons alcalins ou alcalino-terreux et les huiles sulfonées ou sulfatées.

12. Procédé selon l'une des revendications 8 à 11, **caractérisé en ce que** l'équilibre hydrophile/lipophile (H.L.B.) de l'agent émulsifiant est compris entre 2 et 8 et de préférence entre 3 et 6.

13. Procédé selon l'une des revendications 8 à 12, **caractérisé en ce que** la teneur en agent émulsifiant par rapport à la masse globale de l'émulsion est comprise entre 0,5 et 5 % poids, et de préférence entre 1 et 3 % poids.

14. Procédé selon l'une des revendications 8 à 13, **caractérisé en ce que** la base est utilisée sous la forme d'une solution aqueuse ayant une concentration de 10 à 40 % poids, et de préférence de 20 à 30 % poids.

15. Procédé selon l'une des revendications 8 à 14, **caractérisé en ce que** l'agitation, dans l'opération (b) est effectuée par mise en oeuvre d'une énergie de mélange de 50 à 500 kJ par kilogramme de déchets, et de préférence entre 100 et 250 kJ par kilogramme de déchets.

16. Utilisation d'une composition combustible selon l'une des revendications 1 à 7 pour alimenter un foyer de combustion.

## Claims

1. A combustible composition **characterized in that** it comprises:
- a stable water-in-oil and/or water-in-homogeneous organic compound emulsion, formed from fatty heterogeneous waste and comprising at least one emulsifying agent and/or an alkaline or alkaline-earth soap formed from a base selected from among the alkaline and alkaline-earth hydroxides, and
- solid particles in suspension,
said emulsifying agent and/or said base being more soluble in the organic fraction contained in the waste than in water.

2. A combustible composition according to claim 1 **characterized in that** it comprises 10% to 60% by weight of water, 10% to 60% by weight of fats and 1% to 80% by weight of solid particles.

3. A combustible composition according to claim 1 **characterized in that** it comprises 10% to 55% by weight of water, 15% to 45% by weight of fats and 3% to 75% by weight of solid particles.

4. A combustible composition according to any one of claims 1 to 3 **characterized in that** the maximum size of the solid particles is 2 cm across their widest dimension.

5. A combustible composition according to any one of claims 1 to 3 **characterized in that** the maximum size of the solid particles is 1 cm across their widest dimension.

6. A combustible composition according to any one of claims 1 to 5 **characterized in that** it has a net calorific value (NCV) of at least 6000 kJ/kg, preferably at least 10,000 kJ/kg.

7. A combustible composition according to any one of claims 1 to 6 **characterized in that** it further comprises in the fatty phase an agent for blocking the fermentation and/or at least a liquid hydrocarbon.

8. A process for producing a combustible composition according to any one of claims 1 to 7 **characterized in that** it comprises carrying out (a) granulometric homogenisation of a fatty waste and (b) forming a water-in-oil emulsion and/or a water-in-organic compound emulsion, carried out during or after the granulometric homogenisation (a), under agitation and in the presence of an emulsifying agent or abase selected from among the alkaline and alkaline-earth hydroxides, said emulsifying agent and/or said base being more soluble in the organic fraction contained in the waste than in water.

9. A process according to claim 8 **characterized in that** granulometric homogenisation (a) is carried out at a temperature of less than 70°C, preferably at a temperature of less than 55°C.

10. A process according to any one of claims 8 and 9 **characterized in that** the emulsifying agent is an ethoxylated or propoxylated alcohol, fatty acid or ester, amine or amide with high molecular weights, or a mixture of two or more of those compounds.

11. A process according to any one of claims 8 to 10 **characterized in that** the emulsifying agent is selected from alkaline or alkaline-earth soaps and sulphonated or sulphated oils.

12. A process according to any one of claims 8 to 11 **characterized in that** the hydrophilic/lipophilic balance (HLB) of the emulsifying agent is in the range 2 to 8, preferably in the range 3 to 6.

13. A process according to any one of claims 8 to 12 **characterized in that** the amount of emulsifying agent with respect to the overall mass of the emulsion is in the range 0.5% to 5% by weight, preferably in the range 1% to 3% by weight.

14. A process according to any one of claims 8 to 13 **characterized in that** the base is used in the form of an aqueous solution with a concentration of 10% to 40% by weight, preferably 20% to 30% by weight.

15. A process according to any one of claims 8 to 14 **characterized in that** agitation carried out in operation (b) is carried out using a mixing energy of 50 to 500 kJ per kilogram of waste, preferably 100 to 250 kJ per kilogram of waste.

16. Use of a combustible composition according to any one of claims 1 to 7 to supply a combustion furnace.

## Patentansprüche

1. Brennstoffzusammensetzung, **dadurch gekennzeichnet, dass** sie umfasst:
a. eine stabile Emulsion Wasser in Öl und/oder Wasser in organischen homogenen Verbindungen, gebildet aus heterogenen fettigen Abfallprodukten und wenigstens ein Emulgiermittel und/oder wenigstens eine Alkali- oder Erdalkalimetallseife umfassend, welche gebildet ist aus einer Basis bzw. Base, welche aus den Alkalihydroxyden und Erdalkalihydroxyden gewählt ist und
b. Feststoffpartikel in Suspension,
wobei das Emulgiermittel und/oder diese Base löslicher in der organischen in den Abfällen enthaltenen Fraktion als in Wasser ist.

2. Brennstoffzusammensetzung gemäß Anspruch 1, **dadurch gekennzeichnet, dass** sie zwischen 10 und 60 Gew.-% Wasser, zwischen 10 und 60 Gew.-% Fette und zwischen 1 und 80 Gew.-% Feststoffpartikel umfasst.

3. Brennstoffzusammensetzung gemäß Anspruch 1, **dadurch gekennzeichnet, dass** sie zwischen 10 und 55 Gew.-% Wasser, zwischen 15 und 45 Gew.-% Fette und zwischen 3 und 75 Gew.-% Feststoffpartikel umfasst.

4. Brennstoffzusammensetzung nach einem der Ansprüche 1 bis 3, **dadurch gekennzeichnet, dass** die Feststoffpartikel eine Maximalabmessung von 2 cm in ihrer größten Dimension haben.

5. Brennstoffzusammensetzung nach einem der Ansprüche 1 bis 3, **dadurch gekennzeichnet, dass** die Feststoffpartikel eine Maximalabmessung von 1 cm in ihrer größten Dimension haben.

6. Brennstoffzusammensetzung nach einem der Ansprüche 1 bis 5, **dadurch gekennzeichnet, dass** sie einen unteren Brennwert (PCI) von wenigstens 6 000 kJ/kg, bevorzugt wenigstens 10 000 kJ/kg aufweist.

7. Brennstoffzusammensetzung nach einem der Ansprüche 1 bis 6, **dadurch gekennzeichnet, dass** sie im Übrigen in der fettigen Phase ein die Fermentierung blockierendes Agens und/oder wenigstens einen flüssigen Kohlenwasserstoff umfasst.

8. Verfahren zur Herstellung einer Brennstoffzusammensetzung nach einem der Ansprüche 1 bis 7, **dadurch gekennzeichnet, dass** sie die Durchführung einer granulometrischen Homogenisierung (a) eines fettigen Abfalls und (b) die Bildung einer Emulsion Wasser in Öl und/oder Wasser in organischen Verbindungen umfasst, durchgeführt während oder nach der granulometrischen Homogenisierung (a), unter Rühren und in Anwesenheit eines Emulgiermittels oder einer Base, die aus den Alkalihydroxyden und Erdalkalihydroxyden gewählt ist, wobei dieses Emulgiermittel und/oder diese Base in der organischen in den Abfällen enthaltenen Fraktion löslicher als in Wasser ist.

9. Verfahren nach Anspruch 8, **dadurch gekennzeichnet, dass** die granulometrische Homogenisierung (a) bei einer Temperatur von weniger als 70°C und bevorzugt bei einer Temperatur von weniger als 55°C durchgeführt wird.

10. Verfahren nach einem der Ansprüche 8 und 9, **dadurch gekennzeichnet, dass** das Emulgiermittel eine ethoxylierte oder propoxylierte Zusammensetzung von Alkoholen, Säuren oder Fettestern, Aminen oder Amiden von erhöhten Molekulargewichten oder des Gemisches von zwei oder mehreren dieser Verbindungen ist.

11. Verfahren nach einem der Ansprüche 8 bis 10, **dadurch gekennzeichnet, dass** das Emulgiermittel gewählt ist aus den Alkali- oder Erdalkaliseifen und den sulfonierten oder sulfatierten Ölen.

12. Verfahren nach einem der Ansprüche 8 bis 11, **dadurch gekennzeichnet, dass** das hydrophile/lipophile Gleichgewicht (H.L.B.) des Emulgiermittels zwischen 2 und 8 und bevorzugt zwischen 3 und 6 beträgt.

13. Verfahren nach einem der Ansprüche 8 bis 12, **dadurch gekennzeichnet, dass** der Gehalt an Emulgiermittel, bezogen auf die Gesamtmasse der Emulsion, zwischen 0,5 und 5 Gew.-% und bevorzugt zwischen 1 und 3 Gew.-% liegt.

14. Verfahren nach einem der Ansprüche 8 bis 13, **dadurch gekennzeichnet, dass** die Base in Form einer wässrigen Lösung mit einer Konzentration von 10 bis 40 Gew.-%, bevorzugt von 20 bis 30 Gew.-% verwendet wird.

15. Verfahren nach einem der Ansprüche 8 bis 14, **dadurch gekennzeichnet, dass** das Rühren beim Vorgang (b) durch Einsatz einer Mischenergie von 50 bis 500 kJ pro Kilogramm Abfälle, bevorzugt zwischen 100 und 250 kJ pro Kilogramm Abfälle durchgeführt wird.

16. Verwendung einer Brennstoffzusammensetzung nach einem der Ansprüche 1 bis 7 zur Speisung einer Verbrennungsfeuerung.
